# EUROPÄISCHE PATENTANMELDUNG

(11) **EP 1 475 628 A2**
(43) Veröffentlichungstag der Anmeldung: **10.11.2004**
(21) Anmeldenummer: 04010794.8
(22) Anmeldetag: 06.05.2004
(51) Int. Cl.: G01N 21/88

(54) **Beleuchtungsvorrichtung**

(30) Priorität: 06.05.2003 DE 20307076 U
(71) Anmelder: VH Lichttechnische Spezialgeräte GmbH, 53604 Bad Honnef-Rhöndorf (DE)
(72) Erfinder:
(74) Vertreter: Stenger, Watzke & Ring Patentanwälte

(57) **Zusammenfassung**

Die Erfindung betrifft eine Beleuchtungsvorrichtung, insbesondere für den Einsatz bei visuellen Qualitätskontrollen, mit wenigstens einer Lichtquelle und einem wenigstens eine Reflexionsfläche umfassenden Umlenkreflektor, wobei die Lichtquelle, der Umlenkreflektor und die Reflexionsfläche miteinander zu einer gemeinsamen Baugruppe verbunden sind. Um eine Beleuchtungsvorrichtung der vorgenannten Art dahingehend zu verbessern, daß eine vereinfachte Handhabung erreicht wird, wird mit der Erfindung vorgeschlagen, daß als weitere Baugruppen-Komponente eine eine Kamera aufweisende Bilderfassungseinheit vorgesehen ist.

## Beschreibung

Die Erfindung betrifft eine Beleuchtungsvorrichtung, insbesondere für den Einsatz bei visuellen Qualitätskontrollen, mit wenigstens einer Lichtquelle und einem wenigstens eine Reflexionsfläche umfassenden Umlenkreflektor, wobei die Lichtquelle, der Umlenkreflektor und die Reflexionsfläche miteinander zu einer gemeinsamen Baugruppe verbunden sind.

Bekannt ist eine gattungsgemäße Beleuchtungsvorrichtung aus der EP 0 658 721 B1. Bei industriellen Produktionsprozessen werden im Bereich der Produktionsbänder Qualitätskontrollverfahren durchgeführt, zu denen auch die visuelle Qualitätskontrolle gehört. Verwendet werden zu diesem Zweck Beleuchtungsvorrichtungen der vorgenannten Art, bei denen ausgehend von einer Lichtquelle Lichtstrahlen erzeugt und über die Reflexionsflächen auf den zu prüfenden Gegenstand gelenkt werden. Der so ausgeleuchtete Gegenstand kann alsdann einer visuellen Kontrolle unterzogen werden, wobei das infolge der Umlenkung ausgerichtete Licht der Lichtquelle eine wesentlich verbesserte Qualitätskontrolle ermöglicht, als daß dies bei einer Verwendung von diffusem Licht der Fall wäre.

Beleuchtungsvorrichtungen der vorgenannten Art haben sich im alltäglichen Praxiseinsatz bewährt, doch hat die Vergangenheit gezeigt, daß es für den zur Durchführung der Qualitätskontrolle zuständigen Prüfer einen zum Teil erheblichen Aufwand darstellt, den gegenüber dem zu prüfenden Bauteil einzuhaltenden Blickwinkel exakt zu erfassen und im Rahmen der Qualitätskontrolle beizubehalten.

Insbesondere bei der Überprüfung eines aus beispielsweise Aluminium bestehenden Bleches auf etwaige im Produktionsprozeß entstandene Schadstellen hat sich gezeigt, daß sich eine Qualitätsüberprüfung nur sehr schwer und zudem unter nur erheblichem Zeitaufwand durchführen läßt. Darüber hinaus kann eine solche Qualitätskontrolle nicht im Rahmen eines laufenden Produktionsprozesses durchgeführt werden; vielmehr kann eine Überprüfung nur am Endprodukt vorgenommen werden, so daß sich ein zeitlicher Versatz zwischen Fehlererkennung einerseits und Prozeßregulierung anderseits ergibt.

Vom Vorgenannten ausgehend ist es daher **Aufgabe** der Erfindung, eine Beleuchtungsvorrichtung der vorgenannten Art dahingehend zu verbessern, daß eine vereinfachte Handhabung erreicht wird.

**Gelöst** wird diese Aufgabe erfindungsgemäß dadurch, daß als weitere Baugruppen-Komponente eine eine Kamera aufweisende Bilderfassungseinheit vorgesehen ist.

Anders als bei den aus dem Stand der Technik bekannten Vorrichtungen erfolgt erfindungsgemäß eine Erfassung des vom zu prüfenden Gegenstand reflektierten Prüfbildes nicht direkt, sondern vielmehr unter Zwischenschaltung einer Bilderfassungseinheit. Diese umfaßt eine vorzugsweise digital arbeitende Kamera, die als Bestandteil der Beleuchtungsvorrichtung ausgebildet ist und zur Erfassung des zu überprüfenden Gegenstandes entsprechend eingestellt werden kann. Das von der Kamera erfaßte Bild wird über eine Anzeigenvorrichtung, beispielsweise einen Monitor, zur Anzeige gebracht und kann so vom zuständigen Prüfer in Augenschein genommen werden. Eine Überprüfung erfolgt mithin nicht direkt, sondern indirekt mittels des von der Kamera erfaßten und von der Anzeigenvorrichtung angezeigten Bildes.

Vorteil der erfindungsgemäßen Ausgestaltung ist insbesondere, daß die Durchführung einer Qualitätskontrolle nicht weiter davon abhängt, daß der zuständige Prüfer den richtigen Blickwinkel zum zu überprüfenden Gegenstand exakt einhält. Hierdurch kann nicht nur eine Verbesserung der Qualitätskontrolle erreicht werden, auch bleiben dem zuständigen Prüfer die zum Teil erheblichen körperlichen Anstrengungen erspart, um den zum zu überprüfenden Gegenstand richtigen Blickwinkel einzunehmen.

Von Vorteil ist darüber hinaus, daß die erfindungsgemäße Vorrichtung auch eine Qualitätskontrolle im Rahmen eines kontinuierlichen Herstell- oder Bearbeitungsverfahrens des zu überprüfenden Gegenstandes ermöglicht. So kann nämlich die erfindungsgemäße Vorrichtung dank ihrer kompakten Bauform nebst erfindungsgemäß vorgesehener Kamera als integrativer Bestandteil einer Verarbeitungsvorrichtung wie beispielsweise einer Presse ausgebildet sein. Ermöglicht wird durch eine solche Ausgestaltung eine Qualitätsüberprüfung nicht nur am fertig gestellten Endprodukt, stattdessen kann alsgleich im Nachgang an den zu kontrollierenden Bearbeitungsschritt eine Qualitätskontrolle vorgenommen werden, so daß im Falle einer Fehlerdetektion zeitnah eine Nachregelung der Verarbeitungsvorrichtung möglich ist. Dies ist nicht nur aus Zeitgründen von Vorteil, auch ergibt sich hierdurch aus wirtschaftlicher Sicht eine erhebliche Verbesserung.

Gemäß einem weiteren Merkmal der Erfindung ist vorgesehen, daß die zur Prüfbilderfassung vorgesehene Kamera relativ zum zu prüfenden Gegenstand justierbar ist. Unabhängig von Form, Größe oder Geometrie des prüfenden Gegenstandes kann so eine vom jeweiligen Gegenstand abhängige optimierte Einstellung der Kamera gegenüber dem zu überprüfenden Gegenstand eingestellt werden. Die erfindungsgemäße Vorrichtung ist mithin vielseitig einsetzbar und nicht auf die Überprüfung einer bestimmten Geometrieform des zu überprüfenden Gegenstand beschränkt. Zudem ermöglicht die Nachjustage eine Feinabstimmung auf die im Herstell- oder Bearbeitungsprozeß des zu überprüfenden Gegenstandes auftretenden Variationen, so daß eine auf gleichbleibend hohem Niveau durchgeführte Qualitätskontrolle sichergestellt ist.

Gemäß einem weiteren Merkmal der Erfindung ist die Kamera verfahr- und/oder verdrehbar angeordnet. Die zur Justage der Kamera vorgesehene Einstellmöglichkeit ist mithin nicht auf ein reines Verfahren oder ein reines Verdrehen relativ zum zu überprüfenden Gegenstand beschränkt. Vielmehr gestattet die erfindungsgemäße Anordnung der Kamera eine Verdreh- oder Verfahrbewegung gleichermaßen sowie eine aus diesen beiden Verschwenkmöglichkeiten kombinierte Einstellung, so daß in jedem Falle sichergestellt ist, daß der jeweils gewünschte Blickwinkel auf den zu überprüfenden Gegenstand exakt eingestellt werden kann.

Gemäß einem weiteren Merkmal der Erfindung ist vorgesehen, daß die Justage der Kamera rechnergestützt ist. Vorgesehen ist mithin, daß neben einer manuellen Einstellung der Kamera auch eine rechnergestützte Einstellung erfolgen kann. Dies hat den Vorteil einer vereinfachten Einstellung einerseits sowie einer exakt anzusteuernden Einstellungsposition andererseits. Dabei kann eine rechnergestützte Einstellung der Kamera über eine separat vorgesehene Eingabeeinrichtung durch den zuständigen Prüfer selbst vorgenommen werden. Darüber hinaus ist es auch möglich, die Einstellung der Kamera automatisch in Abhängigkeit der Einstellung der Beleuchtungsvorrichtung durchführen zu lassen. Bei dieser alternativen Ausgestaltung ist es nicht erforderlich, daß der zuständige Prüfer die richtige Einstellung der Kamera vornimmt, dies geschieht vielmehr automatisch und damit zeitoptimiert. Zudem können etwaige Fehleinstellungen durch eine falsche Bedienung nahezu ausgeschlossen werden, was die Durchführung einer Qualitätskontrolle weiterhin erhöht.

Gemäß einem weiteren Merkmal der Erfindung ist vorgesehen, daß die Reflexionsfläche ein Lichtsegel ist. Dieses besteht vorzugsweise aus einzelnen Reflexionslamellen, die ebenso wie die Reflexionsfläche als Ganzes relativ zum Strahlengang des Lichtes und zum zu überprüfenden Gegenstand relativ verstellbar ausgebildet sind. Hierdurch wird es möglich, daß die Lichtquelle, der Umlenkreflektor und die Reflexionsfläche zueinander in einer Grundeinstellung ausgerichtet werden können, um dann anschließend als einheitliche Baugruppe relativ zum zu überprüfenden Gegenstand angeordnet zu werden. Damit wird die Einrichtung der Beleuchtungsvorrichtung erheblich vereinfacht und somit der Einsatz derartiger Vorrichtungen wirtschaftlicher. Weiterhin können sämtliche Bauteile der Vorrichtung in einem störanfälligen Bereich relativ zum zu überprüfenden Gegenstand angeordnet werden. Die Lichtquelle kann darüber hinaus zweckmäßigerweise mit wenigstens einem Filter versehen sein, welcher im Strahlengang angeordnet ist. Die Qualität, der Strahlenbereich und gegebenenfalls auch die Polarisierung des Lichtes lassen sich durch einen entsprechenden Filter wahlweise vorgeben.

Gemäß einem weiteren Merkmal der Erfindung ist vorgesehen, daß die Einstellung der Kamera einerseits und die Einstellung der Reflexionsfläche und/oder der Reflexionslamellen andererseits aufeinander abgestimmt sind. Erreicht wir hierdurch, daß einer Einstellung der Reflexionsfläche und/oder der Reflexionslamellen die entsprechend angepaßte Einstellung der Kamera automatisch nachfolgt. In nur einem Einstellschritt kann so die gesamte Vorrichtung ausgerichtet und zur Qualitätskontrolle eingesetzt werden. Die bedarfsgerechte Einstellung der einzelnen Elemente der erfindungsgemäßen Vorrichtung kann dabei rechnergestützt erfolgen, so daß unter weitestgehender Vermeidung etwaiger Einstellfehler in vergleichsweise kurzer Zeit die in Abhängigkeit des zu überprüfenden Gegenstandes zu fordernden Einstellungen erreicht werden können. Die erfolgten Einstellungen sowie das sich hieraus ergebende Prüfbild können vom zuständigen Prüfer am Monitor erfaßt werden, so daß von diesem alsbald ein Abgleich zwischen geforderten Soll-Daten und sich einstellender Ist-Daten vorgenommen und gegebenenfalls eine Nachregulierung veranlaßt werden kann. Insgesamt ermöglicht die erfindungsgemäße Vorrichtung mithin eine vereinfachte Handhabung, was in der Konsequenz zur Durchführung einer verbesserten und insgesamt vereinfachten Qualitätskontrolle führt.

Weitere Vorteile und Merkmale der Erfindung ergeben sich aus der Beschreibung anhand der nachfolgenden Figuren. Dabei zeigen:
- Fig. 1:: eine gattungsgemäße Vorrichtung gemäß dem Stand der Technik und
- Fig. 2:: eine erfindungsgemäße Vorrichtung.

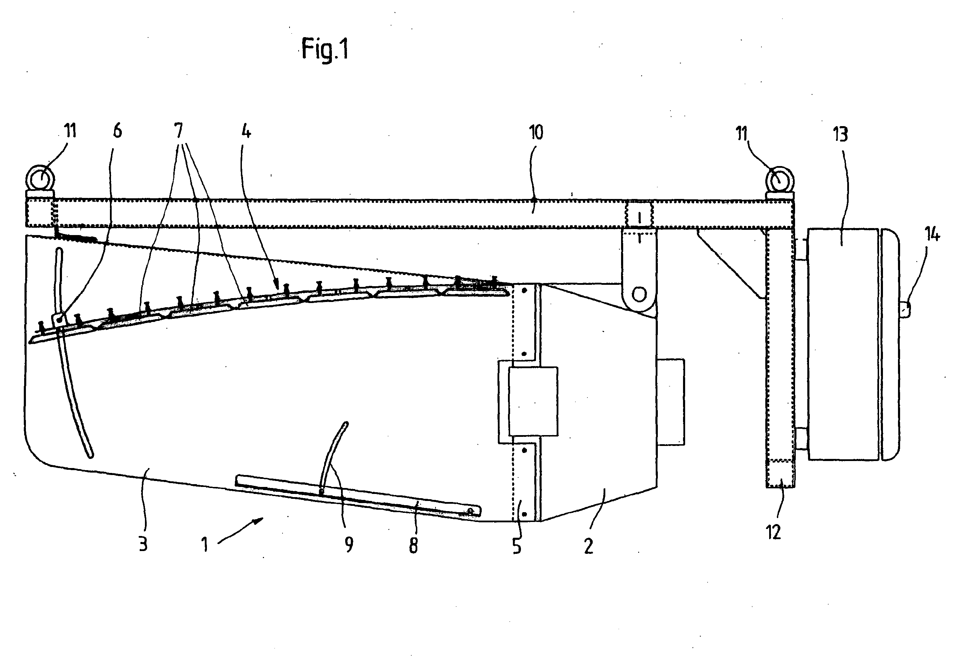

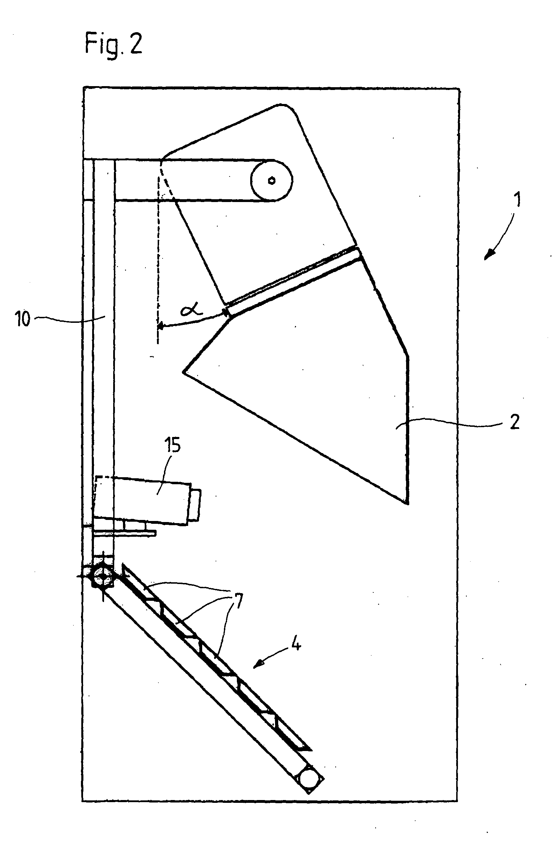

Fig. 1 zeigt in einer schematischen Darstellung eine Vorrichtung gemäß dem Stand der Technik. Die erfindungsgemäße Verbesserung kann indes Fig. 2 entnommen werden, wobei in den Figuren dargestellte gleiche Elemente gleiche Bezugszeichen tragen.

Die in Fig. 1 gezeigte Beleuchtungsvorrichtung 1 umfaßt eine Leuchte 2, einen Umlenkreflektor 3 und eine Reflexionsfläche 4. Der Umlenkreflektor 3 ist am Verbindungsbereich 5 an der Leuchte 2 befestigt. Die Reflexionsfläche 4 ist ihrerseits am Umlenkreflektor 3 befestigt und über eine Verstellmimik 6 verstellbar.

Die Reflexionsfläche 4 besteht aus einzelnen Reflexionslamellen 7, welche ihrerseits relativ zueinander verstellbar angeordnet sind.

Im Strahlenausgangsbereich ist an dem Umlenkreflektor 3 eine Abblendklappe 8 angeordnet, die einseitig drehbar gelagert über eine Verstellmimik 9 relativ zum Strahlenweg verstellt werden kann. Die aus Leuchte 2, Umlenkreflektor 3, Reflexionsfläche 4 und Abblendklappe 8 bestehende Baugruppe ist an einem Traggerüst 10 angeordnet. Dabei handelt es sich um ein Leicht-Traggerüst, an welchem die Baugruppe mittels Haltelaschen befestigt ist. An dem Traggerüst 10 sind Augenschrauben 11 zur Befestigung der Beleuchtungsvorrichtung 1 im Überwachungsbereich angeordnet. An dem Traggerüst 10 ist darüber hinaus ein Ansatzprofil 12 angesetzt, an welchem der Schaltschrank 13 mit einer Bedientafel 14 befestigt ist. Die so entstandene Gesamtheit ist hinsichtlich des Einsatzortes höchst variabel und hinsichtlich der Einzelelemente wirtschaftlich herstell- und einrichtbar.

Fig. 2 zeigt in schematischer Ansicht die erfindungsgemäße Ausgestaltung. Die hier gestellte Ausführungsform entspricht im wesentlichen der nach Fig. 1, wobei erfindungsgemäß vorgesehen ist, daß als weiteres Bauteil eine eine Kamera 15 umfassende Bilderfassungseinheit vorgesehen ist. Die Kamera 15 ist verschiebund/oder verdrehbar am Traggestell 10 angeordnet und dient der Erfassung des Prüfbildes des über die Lichtquelle 2 und die Reflexionsfläche 4 angestrahlten Prüfgegenstandes. Die Ausrichtung der Kamera 15 erfolgt dabei unter einem solchen Winkel, daß das vom Prüfgegenstand erzeugte Prüfbild prüfgerecht erfaßt wird. Das auf diese Weise von der Kamera aufgenommene Prüfbild wird unter Verwendung eines entsprechenden Rechners umgesetzt und auf einem in der Figur nicht näher dargestellten Monitor angezeigt. Der für die Qualitätskontrolle zuständige Prüfer kann nunmehr über das vom Monitor angezeigte Bild eine visuelle Kontrolle des von der Kamera aufgenommenen Prüfbildes durchführen.

Bevorzugter Weise kann die Einstellung der Kamera 15 rechnergesteuert vorgenommen werden. Vorgesehen sein kann in diesem Zusammenhang, daß eine solche Einstellung der Kamera 15 in Abhängigkeit der Stellung von zum prüfenden Gegenstand einerseits und der Stellung der Reflexionsfläche 4 bzw. der Reflexionslamellen 7 und des Winkel α der Leuchte 2 durchgeführt wird. Erreicht werden kann durch eine solche Abhängigkeit in der Einstellung, daß eine stets optimierte Ausrichtung der Kamera und damit verbunden eine fehlerfreie Erfassung des Prüfbildes sichergestellt ist.

Die erfindungsgemäße Vorrichtung kann mit Vorteil als integrativer Bestandteil bestehender Vorrichtungen zur Herstellung und/oder Bearbeitung des zu prüfenden Gegenstandes ausgebildet werden, so daß im Zuge der Verfahrensdurchführung zur Herstellung oder Bearbeitung des zu prüfenden Gegenstandes eine kontinuierliche Qualitätskontrolle durchgeführt werden kann. Etwaig detektierte Fehler können so zeitnah zur Nachregulierung des Herstelloder Bearbeitungsprozesses umgesetzt werden.

Als beispielhafter Anwendungsfall für die erfindungsgemäße Vorrichtung sei die Herstellung von Aluminiumblechen genannt. Durch den Einsatz immer dünnerer und härterer Bleche treten verstärkt Fehler auf, die als sogenannte Dünnzüge oder Anstrengungen bezeichnet werden. Bei zu stark ausgebildeten Anstrengungen reißt das Material, was insbesondere bei der Herstellung von aus Aluminium bestehenden Blechen der Fall ist. Zur Detektion derartiger Fehlstellen im Aluminum-Blech kann die erfindungsgemäße Vorrichtung mit Vorteil eingesetzt werden. Sie bietet nicht nur gegenüber gängigem diffusen Licht die Möglichkeit, die vorgenannten Fehlstellen überhaupt zu detektieren, auch kann durch den erfindungsgemäßen Einsatz der die Kamera umfassenden Bilderfassungseinheit eine Qualitätskontrolle sicher und effektiv durchgeführt werden. Vorzugsweise wird die Vorrichtung zu diesem Zweck direkt am Preßwerk angeordnet, so daß eine Überprüfung der einzelnen Aluminium-Bleche bereits im Zuge der Verfahrensherstellung und nicht erst nach Auslauf aus der Pressenstraße erfolgen kann. Hierdurch wird nicht nur die Arbeit des zuständigen Prüfers vereinfacht, auch ist es möglich, eine kontinuierliche Qualitätskontrolle zeitnah zum eigentlichen Schritt der Herstellung durchzuführen, was im Falle der Detektion etwaiger Fehlstellen eine möglichst rasche Nachjustage des Herstellvorgangs ermöglicht.

Das vorbeschriebene Ausführungsbeispiel dient lediglich der Erläuterung und ist insofern nicht beschränkend.

### Bezugszeichenliste

- 1: Beleuchtungsvorrichtung
- 2: Leuchte
- 3: Umlenkreflektor
- 4: Reflexionsfläche
- 5: Verbindungsbereich
- 6: Verstellmimik
- 7: Reflexionslamelle
- 8: Abblendklappe
- 9: Verstellmimik
- 10: Traggerüst
- 11: Augenschraube
- 12: Ansatzprofil
- 13: Schaltschrank
- 14: Bedientafel
- 15: Kamera

## Patentansprüche

1. Beleuchtungsvorrichtung, insbesondere für den Einsatz bei visuellen Qualitätskontrollen, mit wenigstens einer Lichtquelle und einem wenigstens eine Reflexionsfläche umfassenden Umlenkreflektor, wobei die Lichtquelle, der Umlenkreflektor und die Reflexionsfläche eine gemeinsame Baugruppe bilden,
**dadurch gekennzeichnet, daß**
als weitere Baugruppen-Komponente eine eine Kamera aufweisende Bilderfassungseinheit vorgesehen ist.

2. Beleuchtungsvorrichtung nach Anspruch 1, **dadurch gekennzeichnet, daß** die Kamera relativ zum zu überprüfenden Gegenstand justierbar ist.

3. Beleuchtungsvorrichtung nach Anspruch 2, **dadurch gekennzeichnet, daß** die Kamera verfahr- und/oder verdrehbar angeordnet ist.

4. Beleuchtungsvorrichtung nach einem der Ansprüche 1 bis 3, **dadurch gekennzeichnet, daß** die Justage der Kamera rechnergestützt ist.

5. Beleuchtungsvorrichtung nach einem der vorhergehenden Ansprüche, **dadurch gekennzeichnet, daß** diese eine Anzeigenvorrichtung, insbesondere einen Monitor umfaßt.

6. Beleuchtungsvorrichtung nach einem der vorhergehenden Ansprüche, **dadurch gekennzeichnet, daß** die Reflexionsfläche ein Lichtsegel ist.

7. Beleuchtungsvorrichtung nach einem der vorhergehenden Ansprüche, **dadurch gekennzeichnet, daß** das Lichtsegel aus einzelnen Reflexionslamellen besteht.

8. Beleuchtungsvorrichtung nach einem der vorhergehenden Ansprüche, **dadurch gekennzeichnet, daß** die Reflexionsfläche relativ zum Strahlengang des Lichtes verstellbar ist.

9. Beleuchtungsvorrichtung nach Anspruch 8, **dadurch gekennzeichnet, daß** die einzelnen Reflexionslamellen relativ zum Strahlengang des Lichtes verstellbar sind.

10. Beleuchtungsvorrichtung nach einem der vorhergehenden Ansprüche, **dadurch gekennzeichnet, daß** die Einstellungen von Kamera einerseits und Reflexionsfläche und/oder Reflexionslamellen andererseits aufeinander abgestimmt sind.
